# EUROPÄISCHE PATENTSCHRIFT

(11) **EP 2 564 100 B1**
(45) Veröffentlichungstag und Bekanntmachung des Hinweises auf die Patenterteilung: **14.12.2016**
(21) Anmeldenummer: 11721705.9
(22) Anmeldetag: 12.04.2011
(51) Int. Cl.: F16K 31/163

(54) **BETÄTIGUNGSVORRICHTUNG FÜR EINEN DREHBAREN VERSCHLUSSTEIL EINES VENTILS**
ACTUATOR FOR A ROTABLE VALVE CLOSURE ELEMENT
DISPOSITIF DE COMMANDE D'UN ELEMENT D'ARRÊT DUNE SOUPAPE

(30) Priorität: 24.04.2010 DE 102010018124
(43) Veröffentlichungstag der Anmeldung: 06.03.2013
(73) Patentinhaber: GEA Tuchenhagen GmbH, 21514 Büchen (DE)
(72) Erfinder: BURMESTER, Jens, 23883 Grambek (DE)
(74) Vertreter: Hauck Patentanwaltspartnerschaft mbB
(86) Internationale Anmeldenummer: PCT/EP2011/001802
(87) Internationale Veröffentlichungsnummer: WO 2011/131302

(56) Entgegenhaltungen:
- DE-A1- 3 303 872
- FR-A- 1 448 535
- US-A- 3 023 783

## Beschreibung

### TECHNISCHES GEBIET

Die Erfindung betrifft eine Betätigungsvorrichtung für einen drehbaren Verschlussteil eines Ventils, insbesondere einen pneumatisch oder hydraulisch betätigbaren Drehantrieb für ein Scheiben- oder Drosselklappenventil, mit einem Gehäuse, in dem ein gegen einen zylindrischen Gehäusemantel abgedichteter, einseitig mit einem Druckmittel beaufschlagbarer, axial verschieb- und drehbarer Antriebskolben angeordnet ist, welcher bei Beaufschlagung mit dem Druckmittel eine Bewegung gegen die Wirkung wenigstens einer Rückstellfeder ausführt, welcher an seiner Außenseite mit wenigstens einer Kurvenführung versehen ist, in die ein am Gehäusemantel fest angeordneter Nocken eingreift, der Antriebskolben auf seiner Innenseite eine drehfeste, einen axialen Verschiebefreiheitsgrad aufweisende Mitnahmeverbindung zwischen sich und einer Antriebswelle aufweist, mit der koaxial zum Gehäusemantel durch eine erste Gehäusestirnfläche des Gehäuses hindurchgreifenden und in dieser radial und zu beiden Seiten axial drehbar um eine Drehachse gelagerten Antriebswelle, die von dem Ende des Gehäuses vorsteht, und mit innerhalb des Gehäuses angeordneten Mitteln zur beiderseitigen Begrenzung der Drehbewegung der Antriebswelle.

### STAND DER TECHNIK

Eine Betätigungsvorrichtung der gattungsgemäßen Art ist in der DE 33 03 872 C2 beschrieben. Im Kolben dieser Betätigungsvorrichtung sind zwei einander gegenüberliegend angeordnete Kurvenführungen vorgesehen, die in Form von schrägen Nuten in den äußeren Kolbenmantel eingearbeitet sind und in die Mitnehmer-Rollen eingreifen, die um Achsen drehbar sind. Die Achsen der Rollen sind am Gehäusemantel der Betätigungsvorrichtung befestigt. Die Nuten sind, bezogen auf die Anordnungslage der Betätigungsvorrichtung, oben geschlossen und unten offen. Der Kolben führt somit bei einer Druckmittelbeaufschlagung eine Hub- und gleichzeitig eine Drehbewegung aus. Diese Drehbewegung wird über eine im Zentrum des Kolbens ausgebildete Vierkantkupplung auf eine mit einer Ventilwelle verbundene Antriebswelle übertragen. Die Antriebswelle ist im unteren Zylinderdeckel eines rohrförmigen Pneumatikzylinders radial und zu beiden Seiten axial fliegend gelagert und sie greift dabei drehfest mitnehmend in den auf ihr axial verschieblichen Kolben ein. Die Drehwinkelbegrenzung der Antriebswelle erfolgt in einer durch den Kolben in seiner unter der Wirkung einer Rückstellfeder eingenommenen axialen Ruhestellung auf einem axial verstellbaren Einstellglied. Es handelt sich somit um eine hubabhängige und somit mittelbare Drehwinkelbegrenzung. Die Kurvenführungen sind in nicht näher dargestellter Weise so ausgebildet, dass sie im unteren und mittleren Bereich des Kolbens relativ flach ansteigen, während sie im oberen Kolbenbereich steiler ausgebildet sind.

Die Nachteile der bekannten Betätigungsvorrichtung sind u.a. darin zu sehen, dass diese komplex aufgebaut ist, die Vierkantkupplung an sich und insbesondere aufgrund ihrer relativ kleinen radialen Abmessung, insbesondere bei nichtmetallischer Ausführung des Kolbens, bei großen zu übertragenden Drehmomenten nicht hinreichend stabil ist, die Rückstellfeder einer durch die Drehbewegung des Kolbens hervorgerufenen Torsionsbeanspruchung unterliegt und kolbenseitig daher eines Drucklagers bedarf und schließlich die Drehwinkelbegrenzung hubabhängig und damit mittelbar erfolgt und demzufolge relativ ungenau ist.

Eine verlaufsabhängige, veränderliche Steigung der Kurvenführung ist auch in der EP 0 622 574 B1 beschrieben. Diese Druckschrift offenbart bei einem ausschließlich axial bewegbaren Antriebskolben eine Kurvenfläche der wendelförmigen Nut, die in der Schließstellung des Scheibenventils in einen schwächer gekrümmten und damit steileren Kurvenabschnitt übergeht. Durch die schwächere Krümmung werden eine Vergrößerung der Umfangskraft und damit eine Vergrößerung des Drehmoments in dieser axialen Lage des Antriebskolbens und damit beim Einfahren des Schließgliedes in die Sitzdichtung erreicht.

Eine hubunabhängige, unmittelbare Drehwinkelbegrenzung der Antriebswelle ist aus der DE 20 2005 014 348 U1 und auch aus der DE 297 03 710 U1 bekannt. Bei beiden Drehantrieben ist allerdings der Antriebskolben verdrehsicher geführt, sodass er jeweils nur eine translatorische Bewegung ausführen kann. Die Drehwinkelbegrenzung erfolgt bei beiden bekannten Drehantrieben in einem radialen Bereich innerhalb der die Drehbewegung des Antriebskolbens verhindernden Führungselemente, d.h. in einem, bezogen auf die Drehachse, relativ kleinen radialen Erstreckungsbereich. Damit wirken sich Fertigungstoleranzen der Drehwinkelbegrenzungen entsprechend stark auf den Istwert des realisierten Drehwinkels aus, da der Drehwinkel umgekehrt proportional zum radialen Abstand der Drehwinkelbegrenzungen von der Drehachse ist.

Die DE 20 2005 014 348 U1 offenbart eine Drehbewegungseinrichtung zur Begrenzung der Drehbewegung, die deutlich radial innenseits der Führungselemente endet und die aus einem Riegelnocken und einer etwa kreisringsegmentartigen Ausnehmung besteht, in die der Riegelnocken einfasst und in der er sich relativ zwischen zwei endseitigen Anschlagflächen auf einer kreisringsegmentförmigen Bahn bewegen kann. Die DE 297 03 710 U1 beschreibt ein Anschlagsegment in einer Korrespondenz mit Führungsstangen, die den Drehwinkel hubunabhängig und direkt auf seinen exakten Sollwert begrenzen.

Es ist Aufgabe der vorliegenden Erfindung, eine Betätigungsvorrichtung der gattungsgemäßen Art zu schaffen, die eine hohe Stabilität im Bereich der Mitnahmeverbindung zwischen Antriebskolben und Antriebswelle aufweist, deren Rückstellfeder keine zusätzliche Torsionsbeanspruchung durch ihre beiderseitigen Begrenzungswände erfährt und die eine hubunabhängige, unmittelbare Drehwinkelbegrenzung mit größtmöglicher Genauigkeit aufweist.

### ZUSAMMENFASSUNG DER ERFINDUNG

Diese Aufgabe wird durch eine Betätigungsvorrichtung mit den Merkmalen des Anspruchs 1 oder des Nebenanspruchs 2 gelöst. Vorteilhafte Ausführungsformen der jeweiligen Betätigungsvorrichtung sind Gegenstand der zugeordneten Unteransprüche.

Ein erster grundlegender erfinderischer Lösungsgedanke besteht nach einer ersten Lösung darin, dass die Mitnahmeverbindung zwischen Antriebskolben und Antriebswelle entweder in Form einer mehrkantförmigen Wellen-Naben-Verbindung oder in Form einer am Antriebskolben ausgebildeten, eine geradverzahnte Vielkeil-Nutung aufweisenden Vielkeil-Nabe und einem zur Vielkeil-Nabe komplementären, im Eingriffsbereich als Vielkeil-Welle mit einem Vielkeil-Profil ausgebildeten Wellenkopf, der das Ende der Antriebswelle bildet, ausgeführt ist. Bei dem mehrkantförmigen Formschluss zwischen Welle und Nabe wird bevorzugt ein rechteck- oder gleichseitig vierkantförmiger Formschluss auf größtmöglichem Durchmesser vorgesehen. Das hierzu alternativ vorgeschlagene Vielnut-Profil für den Antriebskolben und den Wellenkopf ist bevorzugt gleichfalls auf größtmöglichem Durchmesser ausgeführt und somit schon aus diesem Grunde für große Drehmomente besonders geeignet. Darüber hinaus ist das Vielnut-Profil gegenüber anderen bekannten Formschluss-Verbindungen in besonderer Weise für große auch stoßhafte Drehmomente und, was im vorliegenden Falle wegen des notwendigen axialen Verschiebefreiheitsgrades zwischen Antriebskolben und Wellenkopf besonders wichtig ist, auch für eine Verschiebe-Nabe, wie sie der Antriebskolben innenseits darstellt, besonders geeignet. Das Drehmoment wird über mehrere Seitenflächen übertragen, wovon man bei genauer Herstellung etwa 75 % als tragend ansieht.

Ein zweiter an sich bekannter Lösungsgedanke sieht vor, dass der Wellenkopf fliegend in der ersten Gehäusestirnfläche gelagert ist und fliegend in die Mitnahmeverbindung im Antriebskolben eingreift. Diese einfache und einseitige Lagerung des Wellenkopfes führt zu einem relativ einfachen konstruktiven Aufbau der Betätigungsvorrichtung.

Ein dritter grundlegender erfinderischer Lösungsgedanke besteht darin, dass der Wellenkopf durch die an der ersten Gehäusestirnfläche und im Verbindungsbereich zwischen letzterer und dem Gehäusemantel angeordnete Mittel eine hubunabhängige, unmittelbare Begrenzung seiner Drehbewegung um die Drehachse erfährt. Da die Mittel gemäß einer vorteilhaften Ausgestaltung gleichfalls auf größtmöglichem Durchmesser, nämlich in einem kürzest möglichen radialen Abstand zum Gehäusemantel des Gehäuses der Betätigungsvorrichtung bzw. in unmittelbarer radialer Nähe zum Gehäusemantel angeordnet sind, ergibt sich dadurch eine größtmöglich erreichbare Drehwinkelgenauigkeit.

Der erste Lösungsgedanke einer zweiten Lösung besteht darin, dass die Antriebswelle in an sich bekannter Weise innerhalb des Gehäuses in einem Wellenkopf endet, der zusammen mit dem Antriebskolben die Mitnahmeverbindung ausbildet.

Dieser erste Lösungsgedanke wird durch einen zweiten grundlegenden Lösungsgedanken modifiziert, indem der Wellenkopf über die Mitnahmeverbindung hinaus verlängert und diese Verlängerung verschieblich und abgedichtet durch den Antriebskolben hindurchgeführt und in einer zweiten Gehäusestirnfläche, die den Gehäusemantel an dessen der ersten Gehäusestirnfläche abgewandten Ende stirnseitig begrenzt, abgedichtet und drehbar gelagert ist. Diese beidseitige Lagerung des Wellenkopfes in den beiden Gehäusestirnflächen ist besonders stabil und sicher und beugt dadurch einer Verkantung des Antriebskolbens vor.

Ein dritter grundlegender erfinderischer Lösungsgedanke besteht darin, in gleicher Weise wie bei der ersten Lösung, dass der Wellenkopf durch die an der ersten Gehäusestirnfläche und im Verbindungsbereich zwischen letzterer und dem Gehäusemantel angeordnete Mittel eine hubunabhängige, unmittelbare Begrenzung seiner Drehbewegung um die Drehachse erfährt. Da die Mittel gemäß einer vorteilhaften Ausgestaltung gleichfalls auf größtmöglichem Durchmesser, nämlich in einem kürzest möglichen radialen Abstand zum Gehäusemantel des Gehäuses der Betätigungsvorrichtung bzw. in unmittelbarer radialer Nähe zum Gehäusemantel angeordnet sind, ergibt sich dadurch eine größtmöglich erreichbare Drehwinkelgenauigkeit für den gewünschten Sollwert.

Die Mitnahmeverbindung zwischen Antriebskolben und Antriebswelle ist in gleicher Weise, wie bei der vorstehend beschriebenen ersten Lösung, ausgebildet, und zwar entweder in Form einer mehrkantförmigen Wellen-Naben-Verbindung oder in Form einer am Antriebskolben ausgebildeten, eine geradverzahnte Vielkeil-Nutung aufweisenden Vielkeil-Nabe und einem zur Vielkeil-Nabe komplementären, im Eingriffsbereich als Vielkeil-Welle mit einem Vielkeil-Profil ausgebildeten Wellenkopf, der das Ende der Antriebswelle bildet. Die vorstehend im Zusammenhang mit der ersten Lösung beschriebenen Ausgestaltungsvarianten und Vorteile sind adäquat auf die zweite Lösung übertragbar.

Die nachstehend darüber hinaus beschriebenen Ausführungsformen sind auf die erste und die zweite vorstehend beschriebene Lösung gleichfalls uneingeschränkt anwendbar. Nach einer vorteilhaften Ausführungsform stützt sich die wenigstens eine Rückstellfeder an ihrem dem Antriebskolben abgewandten Ende an dem Wellenkopf unmittelbar oder mittelbar ab. Da Antriebskolben und Wellenkopf drehfest miteinander verbunden sind, erfährt die Rückstellfeder zwischen diesen beiden endseitigen Begrenzungsflächen keine zusätzliche Torsionsbeanspruchung, und es ist demzufolge auch kein drehbewegliches Federwiderlager erforderlich.

Es ist vorgesehen, dass sich das dem Antriebskolben abgewandte Ende des Wellenkopfes entweder unmittelbar oder über eine Gleitscheibe an der ersten Gehäusestirnfläche abstützt. Die Anordnung der Gleitscheibe kann dann zweckmäßig sein, wenn die Reibung der Materialpaarung Wellenkopf/erste Gehäusestirnfläche unzulässig hoch ist.

Wird, wie dies eine vorteilhafte Ausführungsform vorschlägt, an der der ersten Gehäusestirnfläche zugewandten Seite eines Kolbenbodens des Antriebskolbens ein topfförmig ausgebildeter Kolbenschaft vorgesehen, dann lässt sich in diesem Kolbenschaft zum Einen die Kurvenführung problemlos ausbilden und zum Anderen dient die Innenseite des Kolbenschaftes entweder als mehrkantförmige Nabe oder als Keilnabe mit ihrer Vielkeil-Nutung der formschlüssigen Verbindung mit dem Wellenkopf, der als komplementäre mehrkantförmige Welle oder als Vielkeil-Welle mit ihrer Vielkeil-Nutung ausgeführt ist.

Die Kurvenführung wird vorteilhaft in Form einer zum freien Ende des Kolbenschaftes hin offenen wendelförmigen Nut ausgebildet, wodurch sich die Herstellung der Kurvenführung sehr einfach gestaltet und die Montage des Antriebskolbens im Gehäuse und in Verbindung mit den dort fest angeordneten Nocken ohne besonderen Aufwand durchführbar ist. Dies gilt in besonderer Weise auch dann, wenn die Kurvenführung in Form zweier, jeweils zum freien Ende des Kolbenschaftes hin offenen wendelförmigen Nuten ausgebildet ist, die diametral einander gegenüberliegend angeordnet sind.

Das Drehmoment zur Betätigung des scheibenförmigen Verschlussteils des Ventils lässt sich auf einfache Weise den Erfordernissen, insbesondere in der Phase des Einfahrens in die Sitzdichtung, anpassen, wenn die Kurvenführung eine verlaufsabhängige veränderliche Steigung aufweist. In diesem Zusammenhang wird vorgeschlagen, die Steigung, gemessen gegen die Längsachse des Antriebskolbens, im jeweiligen Endbereich der Kurvenführung größer als im mittleren Bereich der Kurvenführung auszuführen. Dadurch wird in den Endbereichen ein größeres Drehmoment als im mittleren Bereich realisiert. Beide Endbereiche treten diesbezüglich in optionale Funktion, da die Betätigungsvorrichtung, bezogen auf das Schließglied, sowohl federschließend als auch federöffnend am Ventil angeordnet werden kann. Eine derartige Schaltcharakteristik wird durch eine sich um 90 Grad unterscheidende Anordnung der Betätigungsvorrichtung gegenüber dem Ventil erreicht.

Eine vorteilhafte Ausführungsform sieht vor, dass der Gehäusemantel mit der ersten Gehäusestirnfläche lösbar oder stoffschlüssig verbunden ist. Im ersten Falle bleibt der Innenraum der Betätigungsvorrichtung zu Wartungszwecken zugänglich. Im zweiten Falle ist die Betätigungsvorrichtung sehr kostengünstig herzustellen, wobei eine diesbezügliche Wartung nicht mehr möglich ist.

Die Herstellkosten der Betätigungsvorrichtung lassen sich weiter reduzieren, wenn der Gehäusemantel mit einer der ersten Gehäusestirnfläche gegenüberliegenden zweiten Gehäusestirnfläche eine topfförmige, einstückige Einheit bildet.

Die Verbindung der Betätigungsvorrichtung mit einem sich zwischen dieser und dem Ventil angeordneten Laternengehäuse gestaltet sich besonders einfach und kostengünstig, wenn die erste Gehäusestirnfläche und das an der dem Wellenkopf abgewandten Seite der ersten Gehäusestirnfläche angeordnete Laternengehäuse über wenigstens zwei und jeweils in der ersten Gehäusestirnfläche verankerte Verbindungsbolzen in Verbindung mit jeweils einer zugeordneten Verbindungsmutter miteinander verschraubt sind.

Eine weitere signifikante Vereinfachung wird erreicht, wenn der Verbindungsbolzen gleichzeitig zur Drehwinkelbegrenzung des Wellenkopfes genutzt wird und die Genauigkeit der Drehwinkelbegrenzung wird größtmöglich gesteigert, wenn der Verbindungsbolzen, soweit dies überhaupt möglich ist, radial außenseits und damit im Verbindungsbereich zwischen Gehäusemantel und erster Gehäusestirnfläche platziert wird. Dies gelingt gemäß einem weiteren Vorschlag dadurch, dass der Wellenkopf an seinem der ersten Gehäusestirnfläche zugewandten Ende als Wellenkopf-Fuß in Form eines ringförmigen, zum Gehäusemantel hin auskragenden Flansches ausgebildet ist, und dass im Wellenkopf-Fuß zwei kreisringsegmentartige Ausnehmungen diametral einander gegenüberliegend angeordnet sind, in die jeweils ein Kopf des Verbindungsbolzens eingreift. Dabei dient die jeweilige laterale Begrenzung der Ausnehmung als Anschlagfläche für den Kopf des Verbindungsbolzens und der Wellenkopf beschreibt dabei zwischen seinen beiden Endlagen unter Berücksichtigung der und in Korrespondenz mit den relevanten Abmessungen des jeweiligen Kopfes des Verbindungsbolzens mit sehr hoher Genauigkeit einen gewünschten Sollwert des Drehwinkels, vorzugsweise einen von 90 Grad.

Die Genauigkeit, mit der der Drehwinkel erzeugt werden kann, steigt mit zunehmendem Durchmesser des Wellenkopf-Fußes. Es ist daher von Vorteil, den Durchmesser des Wellenkopf-Fußes so groß wie möglich zu bemessen. Zu diesem Zweck wird die jeweilige Ausnehmung am Umfang des Wellenkopf-Fußes ausgeführt und ihre Herstellung vereinfacht sich, wenn diese zum Umfang hin offen ist. Höhere Stabilität und Führungssicherheit des Wellenkopfes im Bereich seines Wellenkopf-Fußes wird erreicht, wenn die jeweilige Ausnehmung unter den sonst unveränderten vorstehenden Bedingungen in Form einer geschlossenen Ringnut ausgeführt ist.

Bei der Betätigungsvorrichtung gemäß der ersten Lösung ergibt sich eine sehr gute Zentrierung der wenigstens einen Rückstellfeder, wenn diese an einem Wellenkopf-Boden in einer zentrisch im Wellenkopf ausgebildeten topfförmigen Ausnehmung anliegt.

Bei der Betätigungsvorrichtung gemäß der zweiten Lösung ergibt sich eine sehr gute Zentrierung der wenigstens einen Rückstellfeder, wenn diese den Wellenkopf und seine Mitnahmeverbindung mit dem Antriebskolben radial außenseits umschließt.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in zwei grundlegend sich unterscheidenden Lösungen hinsichtlich der Lagerung des Wellenkopfes und dabei jeweils in den verschiedensten Ausführungsformen realisiert ist, werden in der Zeichnung ein bevorzugtes Ausführungsbeispiel der Betätigungsvorrichtung im Rahmen der ersten Lösung dargestellt und nachfolgend nach Aufbau und Funktion beschrieben. Es zeigen
- **Figur 1**: im Mittelschnitt eine bevorzugte Ausführungsform einer ersten Lösung der Betätigungsvorrichtung gemäß der Erfindung in Verbindung mit einem in Ansicht dargestellten Scheibenventil;
- **Figur 2**: in perspektivischer Darstellung einen Blick in die geöffnete und im oberen Teil in der Meridianebene geschnittene Betätigungsvorrichtung gemäß **Figur 1****;**
- **Figur 3**: in perspektivischer Darstellung einen Blick in die geöffnete Betätigungsvorrichtung gemäß **Figur 1****,** wobei die Darstellung insbesondere einen Antriebskolben mit einer Kurvenführung zeigt, in die ein Wellenkopf eingreift, und wobei die Kurvenführung in Form einer zum freien Ende eines Kolbenschaftes hin offenen wendelförmigen Nut ausgebildet ist und
- **Figur 4**: in perspektivischer Darstellung die hubunabhängige Drehwinkelbegrenzung des Wellenkopfes der Betätigungsvorrichtung gemäß **Figur 1** im Bereich des Wellenkopf-Fußes.

### DETAILLIERTE BESCHREIBUNG

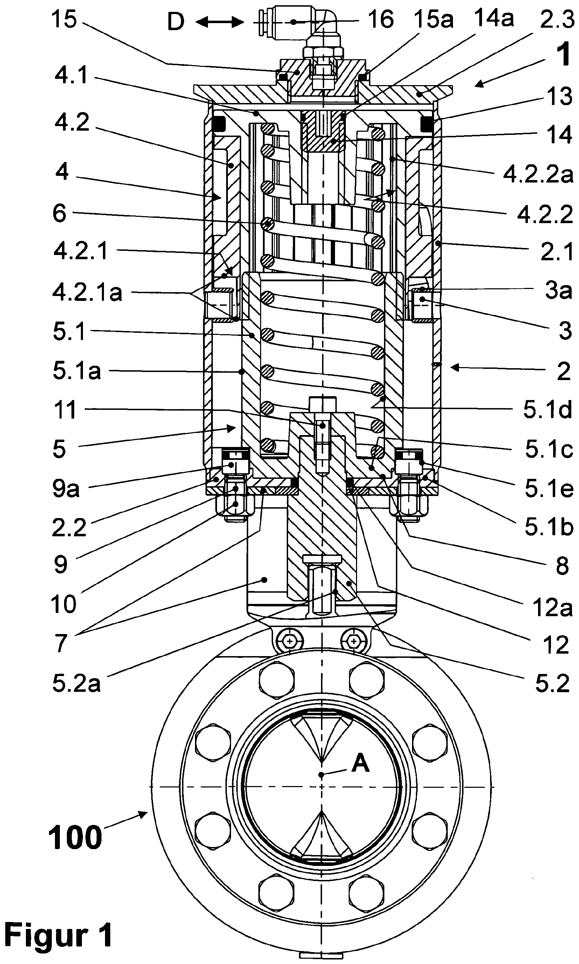

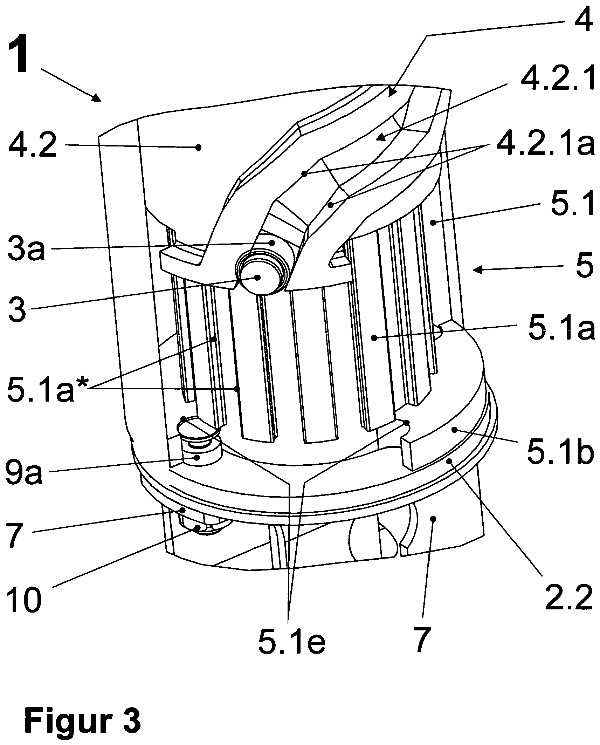

Eine Betätigungsvorrichtung 1 **(****Figuren 1** bis **4****)** für einen drehbaren Verschlussteil eines Ventils 100 ist über ein Laternengehäuse 7 **(****Figuren 1****, 3)** mit letzterem verbunden. Im Ausführungsbeispiel handelt es sich um eine pneumatisch betätigbare Betätigungsvorrichtung 1, auch als Drehantrieb bezeichnet, für das Ventil 100, das auch als Scheiben- oder Drosselklappenventil 100 bezeichnet wird. Die Betätigungsvorrichtung 1 kann bei entsprechender Anpassung auch mit einem hydraulischen Druckmittel D beaufschlagt werden.

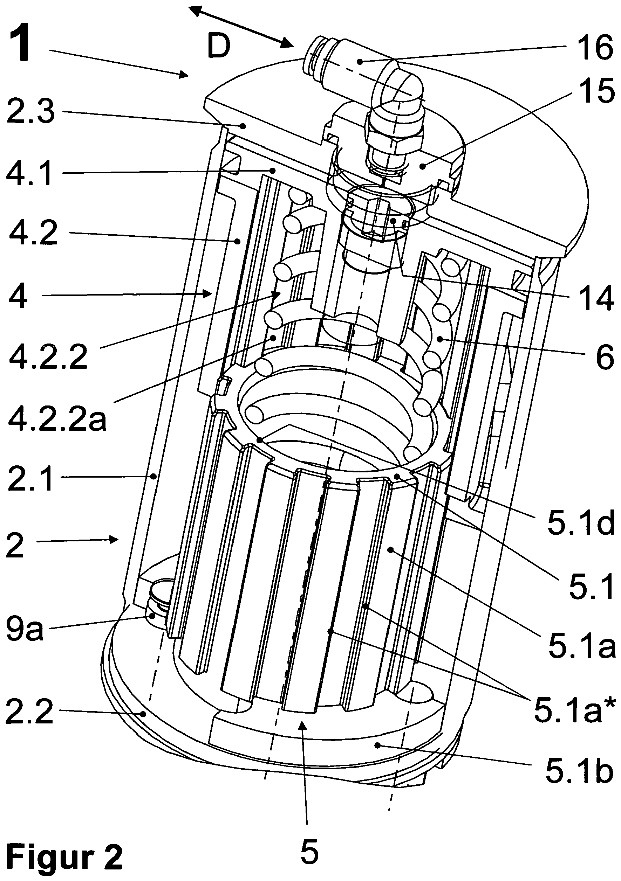

Die Betätigungsvorrichtung 1 besteht aus einem Gehäuse 2 **(****Figuren 1****, 2),** in dem ein gegen einen zylindrischen Gehäusemantel 2.1 mittels einer Kolbendichtung 13 abgedichteter, einseitig mit dem Druckmittel D, vorzugsweise Druckluft, beaufschlagbarer, axial verschieb- und drehbarer Antriebskolben 4 angeordnet ist. Letzterer führt bei Beaufschlagung mit dem Druckmittel D eine Bewegung gegen die Wirkung wenigstens einer Rückstellfeder 6 aus. Der Antriebskolben 4 weist einen Kolbenboden 4.1 auf, an dessen dem Ventil 100 zugewandten Seite zentrisch ein topfförmig ausgebildeter Kolbenschaft 4.2 ausgebildet ist. An der Außenseite des Kolbenschaftes 4.2, zweckmäßig in die Wandstärke des Kolbenschaftes 4.2 ein-, aber nicht hindurchgreifend **(****Figuren 1** und **3****),** ist eine Kurvenführung 4.2.1 vorgesehen, in die ein am Gehäusemantel 2.1 fest angeordneter Nocken 3 eingreift. Zur Verminderung der Reibung ist dieser Nocken 3 vorteilhaft außenseits mit einer Nockenrolle 3a versehen, die zweckmäßig um den Nocken 3, der nunmehr als Achse fungiert, drehbar ist.

Die Kurvenführung 4.2.1 ist zweckmäßig in Form einer zum freien Ende des Kolbenschaftes 4.2 hin offenen wendelförmigen Nut 4.2.1a ausgebildet, wobei es weiterhin vorteilhaft ist, die Kurvenführung 4.2.1 in Form zweier, jeweils zum freien Ende des Kolbenschaftes 4.2 hin offenen wendelförmigen Nuten 4.2.1a vorzusehen, die diametral einander gegenüberliegend angeordnet sind **(****Figur 1****).** Die Kurvenführung 4.2.1 erhält weiterhin bevorzugt eine verlaufsabhängige veränderliche Steigung. Letztere ist, gemessen gegen die Längsachse des Antriebskolbens 4, bevorzugt im jeweiligen Endbereich der Kurvenführung 4.2.1 größer als im mittleren Bereich der Kurvenführung 4.2.1 ausgeführt **(****Figur 3****).**

Der Antriebskolben 4 besitzt auf der Innenseite seines Kolbenschaftes 4.2 eine drehfeste, einen axialen Verschiebefreiheitsgrad aufweisende Mitnahmeverbindung 4.2.2/5.1 a bzw. 4.2.2a/5.1a* zwischen sich und einer Antriebswelle 5, die an dieser Stelle als Wellenkopf 5.1 ausgeführt ist **(****Figuren 1** bis **4****).** Die Antriebswelle 5 ist zweigeteilt; sie weist unterhalb des Wellenkopfes 5.1 einen mit diesem über eine Verbindungsschraube 11 verschraubten Wellenschaft 5.2 auf, der koaxial zum Gehäusemantel 2.1 durch eine erste Gehäusestirnfläche 2.2 des Gehäuses 2 hindurchgreift, in dieser radial und zu beiden Seiten axial mittels einer Arretierscheibe 12 drehbar gelagert ist und von dem Ende des Gehäuses 2, der ersten Gehäusestirnfläche 2.2, vorsteht. Die Abdichtung des Wellenschaftes 5.2 gegenüber der ersten Gehäusestirnfläche 2.2 erfolgt über eine Wellendichtung 12a. Im Wellenschaft 5.2 ist untenseits und endseitig eine Mitnehmer-Ausnehmung 5.2a ausgebildet, in die ein nach außen über das Gehäuse des Ventils 100 hindurchgreifender Lagerzapfen eines scheibenförmigen Schließgliedes formschlüssig, in um vorzugsweise 90 Grad um eine Drehachse A verdrehbarer Positionierung, eingreift.

Die Mitnahmeverbindung 4.2.2/5.1 a bzw. 4.2.2a/5.1a* ist in Form einer am Antriebskolben 4 ausgebildeten, eine geradverzahnte Vielkeil-Nutung 4.2.2a aufweisenden Vielkeil-Nabe 4.2.2 **(****Figuren 2****,** **4****,** **1****,** **3****)** und dem zur Vielkeil-Nabe 4.2.2 komplementären, im Eingriffsbereich als Vielkeil-Welle 5.1 a mit einem Vielkeil-Profil 5.1a* ausgebildeten Wellenkopf 5.1, der das Ende der Antriebswelle 5 bildet, ausgeführt.

Die erste Gehäusestirnfläche 2.2 und das an der dem Wellenkopf 5.1 abgewandten Seite der ersten Gehäusestirnfläche 2.2 angeordnete Laternengehäuse 7 sind über wenigstens zwei und jeweils in der ersten Gehäusestirnfläche 2.2 verankerte Verbindungsbolzen 9 in Verbindung mit jeweils einer zugeordneten Verbindungsmutter 10 miteinander verschraubt **(****Figuren 1****, 3).** Die beiden Verbindungsbolzen 9 dienen innerhalb des Gehäuses 2 gleichzeitig auch als Mittel zur beiderseitigen Begrenzung der Drehbewegung der Antriebswelle 5.

Zu diesem Zweck ist der Wellenkopf 5.1 an seinem der ersten Gehäusestirnfläche 2.2 zugewandten Ende als Wellenkopf-Fuß 5.1 b in Form eines ringförmigen, zum Gehäusemantel 2.1 hin auskragenden Flansches ausgebildet, wobei im Wellenkopf-Fuß 5.1 b zwei kreisringsegmentartige Ausnehmungen 5.1 e diametral einander gegenüberliegend angeordnet sind, in die jeweils ein Kopf 9a des Verbindungsbolzens 9 eingreift **(****Figuren 1** bis **4****).** Dadurch ist eine Drehbewegung der Antriebswelle 5 um die Drehachse A im Umfang des durch die Ausnehmung 5.1e in Verbindung mit den Abmessungen des Kopfes 9a bestimmten gewünschten Sollwerts des Drehwinkels mit hoher Genauigkeit möglich und determiniert.

Die wenigstens eine Rückstellfeder 6 stützt sich obenseits am Kolbenboden 4.1 und untenseits an einem Wellenkopf-Boden 5.1c in einer zentrisch im Wellenkopf 5.1 ausgebildeten topfförmigen Ausnehmung 5.1 d unmittelbar ab. Das dem Antriebskolben 4 abgewandten Ende des Wellenkopfes 5.1 stützt sich über eine Gleitscheibe 8 an der ersten Gehäusestirnfläche 2.2 ab. Bei günstigen Reibungsverhältnissen zwischen den in Frage kommenden Materialpaarungen kann auf diese Gleitscheibe 8 verzichtet werden **(****Figur 1****).**

Der Gehäusemantel 2.1 ist mit der ersten Gehäusestirnfläche 2.2 lösbar gefügt oder stoffschlüssig verbunden. Im Ausführungsbeispiel ist die stoffschlüssige Verbindung dargestellt. Der Gehäusemantel 2.1 bildet weiterhin mit einer der ersten Gehäusestirnfläche 2.2 gegenüberliegenden zweiten Gehäusestirnfläche 2.3 eine topfförmige, einstückige Einheit.

In der zweiten Gehäusestirnfläche 2.3 ist zentrisch ein Anschlussstopfen 15, abgedichtet über eine zweite Stopfendichtung 15a, eingeschraubt, der wiederum einen Druckmittelanschluss 16 aufnimmt **(****Figuren 1****,** **2****,** **4****).** Im Kolbenboden 4.1 ist zentrisch ein Kolbenstopfen 14, abgedichtet über eine erste Stopfendichtung 14a, eingeschraubt, der für die Aufnahme einer nicht dargestellten Stange zur Rückmeldung der Stellung des Ventils 100 ausgebildet ist. Diese Rückmeldung kann durch Anzeige der Stellung der Stange in die Umgebung oder durch Übertragung der Stellung der Stange in einen sich an die Betätigungsvorrichtung 1 obenseits anschließenden Steuerkopf, wo beispielsweise ein Schalter berührend oder berührungslos betätigt wird, erfolgen.

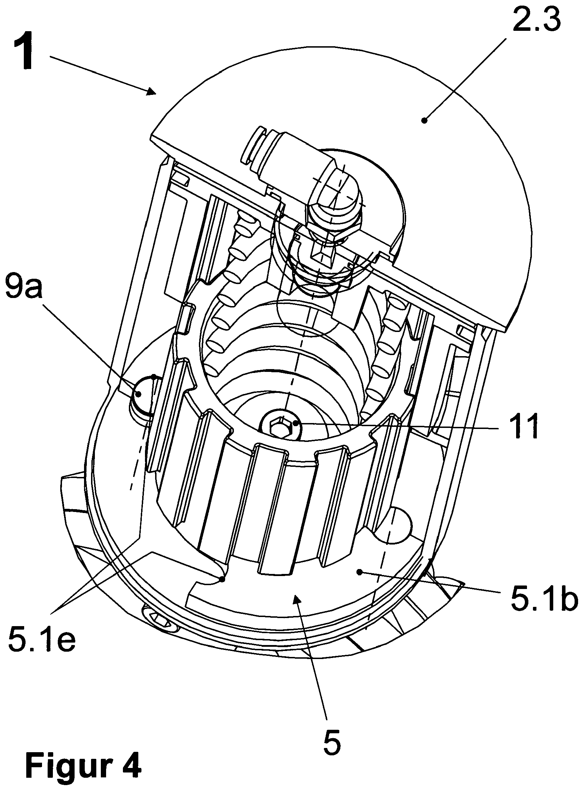

Wird der Raum zwischen dem Kolbenboden 4.1 und der zweiten Gehäusestirnfläche 2.3 über den Druckmittelanschluss 16 mit Druckmittel D beaufschlagt (Figur 1), bewegt sich der Antriebskolben 4 gegen die Kraft der Rückstellfeder 6 nach unten. Infolge des Eingriffs der Nocken 3 in Verbindung mit der Nockenrolle 3a in die zugeordnete Kurvenführung 4.2.1 **(****Figur 3****),** die in Form einer wendelförmigen Nut 4.2.1 a ausgebildet ist, überlagert sich der Abwärtsbewegung des Antriebskolbens 4 gleichzeitig eine durch die Kurvenführung 4.2.1 determinierte Drehbewegung. Diese Drehbewegung wird zwangsläufig und schlupffrei mittels der Mitnahmeverbindung 4.2.2/5.1 a bzw. 4.2.2a/5.1a* **(****Figuren 1** bis **4****)** auf den Wellenkopf 5.1 und damit auf die Antriebswelle 5 übertragen, während die axiale Abwärtsbewegung des Antriebskolbens 4 gegenüber dem axial fixierten Wellenkopf 5.1 durch die Mitnahmeverbindung 4.2.2/5.1 a bzw. 4.2.2a/5.1a* zugelassen wird. Der erforderliche Drehwinkel des Schließgliedes des Ventils 100 ist hubunabhängig und wird allein mit großer Genauigkeit durch die Bemessung der kreisringsegmentartigen Ausnehmung 5.1 e am Umfang des Wellenkopf-Fußes 5.1 b bestimmt **(****Fig. 3****, 4).**

Durch Zuordnung der Betätigungsvorrichtung 1 zu den beiden möglichen Endstellungen des Ventils 100, der Schließ- und der Offenstellung, kann die vorstehend beschriebene Abwärtsbewegung des Antriebskolbens 4 die Öffnungs- oder die Schließbewegung des Ventils 100 generieren.

Die Aufwärtsbewegung des Antriebskolbens 4 wird allein durch die Kraft der Rückstellfeder 6 und sinngemäß in umgekehrter Abfolge der beschriebenen Schritte bewirkt. Abhängig von der vorstehend beschriebenen Zuordnung generiert die Aufwärtsbewegung dann die Schließ- oder die Öffnungsbewegung des Ventils 100.

### BEZUGSZEICHENLISTE DER VERWENDETEN ABKÜRZUNGEN

- 1: Betätigungsvorrichtung
- 100: Ventil (Scheibenventil)

- 2: Gehäuse
- 2.1: Gehäusemantel
- 2.2: erste Gehäusestirnfläche
- 2.3: zweite Gehäusestirnfläche

- 3: Nocken
- 3a: Nockenrolle

- 4: Antriebskolben
- 4.1: Kolbenboden
- 4.2: Kolbenschaft
- 4.2.1: Kurvenführung
- 4.2.1a: wendelförmige Nut
- 4.2.2: Keilnabe (oder Nabe mit mehrkantförmiger Bohrung, z.B. Vierkant)
- 4.2.2a: Vielkeil-Nutung

- 5: Antriebswelle
- 5.1: Wellenkopf
- 5.1a: Vielkeil-Welle (oder Mehrkant, z.B. Vierkant)
- 5.1a*: Vielkeil-Profil

- 5.1b: Wellenkopf-Fuß
- 5.1c: Wellenkopf-Boden
- 5.1d: topfförmige Ausnehmung
- 5.1e: Ausnehmung

- 4.2.2/5.1a: Mitnahmeverbindung (über 4.2.2a/5.1a*: Vielkeil-Nutung/Vielkeil-Profil oder mehrkantförmige Wellen-Nabenverbindung, z.B. Vierkant)
- 5.2: Wellenschaft
- 5.2a: Mitnehmer-Ausnehmung

- 6: Rückstellfeder
- 7: Laternengehäuse
- 8: Gleitscheibe

- 9: Verbindungsbolzen
- 9a: Kopf

- 10: Verbindungsmutter
- 11: Verbindungsschraube

- 12: Arretierscheibe
- 12a: Wellendichtung

- 13: Kolbendichtung

- 14: Kolbenstopfen
- 14a: erste Stopfendichtung

- 15: Anschlussstopfen
- 15a: zweite Stopfendichtung

- 16: Druckmittelanschluss

- A: Drehachse
- D: Druckmittel (pneumatisch, hydraulisch)

## Patentansprüche

1. Betätigungsvorrichtung für einen drehbaren Verschlussteil eines Ventils (100), insbesondere einen pneumatisch oder hydraulisch betätigbaren Drehantrieb (1) für ein Scheiben- oder Drosselklappenventil, mit einem Gehäuse (2), in dem ein gegen einen zylindrischen Gehäusemantel (2.1) abgedichteter, einseitig mit einem Druckmittel (D) beaufschlagbarer, axial verschieb- und drehbarer Antriebskolben (4) angeordnet ist, welcher bei Beaufschlagung mit dem Druckmittel (D) eine Bewegung gegen die Wirkung wenigstens einer Rückstellfeder (6) ausführt, welcher an seiner Außenseite mit wenigstens einer Kurvenführung (4.2.1) versehen ist, in die ein am Gehäusemantel (2.1) fest angeordneter Nocken (3, 3a) eingreift, der Antriebskolben (4) auf seiner Innenseite eine drehfeste, einen axialen Verschiebefreiheitsgrad aufweisende Mitnahmeverbindung (4.2.2/5.1a; 4.2.2a/5.1a*) zwischen sich und einer Antriebswelle (5) aufweist, mit der koaxial zum Gehäusemantel (2.1) durch eine erste Gehäusestirnfläche (2.2) des Gehäuses (2) hindurchgreifenden und in dieser radial und zu beiden Seiten axial drehbar um eine Drehachse (A) gelagerten Antriebswelle (5), die von dem Ende des Gehäuses (2) vorsteht, und mit innerhalb des Gehäuses (2) angeordneten Mitteln (9) zur beiderseitigen Begrenzung der Drehbewegung der Antriebswelle (5),
**dadurch gekennzeichnet,**
• **dass** die Mitnahmeverbindung (4.2.2/5.1a; 4.2.2a/5.1a*) entweder in Form einer mehrkantförmigen Wellen-Naben-Verbindung oder in Form einer am Antriebskolben (4) ausgebildeten, eine geradverzahnte Vielkeil-Nutung (4.2.2a) aufweisenden Vielkeil-Nabe (4.2.2) und einem zur Vielkeil-Nabe (4.2.2) komplementären, im Eingriffsbereich als Vielkeil-Welle (5.1a) mit einem Vielkeil-Profil (5.1a*) ausgebildeten Wellenkopf (5.1), der das Ende der Antriebswelle (5) bildet, ausgeführt ist,
• **dass** der Wellenkopf (5.1) fliegend in der ersten Gehäusestirnfläche (2.2) gelagert ist und fliegend in die Mitnahmeverbindung (4.2.2/5.1a; 4.2.2a/5.1a*) im Antriebskolben (4) eingreift,
• und **dass** der Wellenkopf (5.1) durch die an der ersten Gehäusestirnfläche (2.2) und im Verbindungsbereich zwischen letzterer und dem Gehäusemantel (2.1) angeordneten Mittel (9) eine hubunabhängige, unmittelbare Begrenzung seiner Drehbewegung um die Drehachse (A) erfährt.

2. Betätigungsvorrichtung für einen drehbaren Verschlussteil eines Ventils (100),
insbesondere einen pneumatisch oder hydraulisch betätigbaren Drehantrieb (1) für ein Scheiben- oder Drosselklappenventil, mit einem Gehäuse (2), in dem ein gegen einen zylindrischen Gehäusemantel (2.1) abgedichteter, einseitig mit einem Druckmittel (D) beaufschlagbarer, axial verschieb- und drehbarer Antriebskolben (4) angeordnet ist, welcher bei Beaufschlagung mit dem Druckmittel (D) eine Bewegung gegen die Wirkung wenigstens einer Rückstellfeder (6) ausführt, welcher an seiner Außenseite mit wenigstens einer Kurvenführung (4.2.1) versehen ist, in die ein am Gehäusemantel (2.1) fest angeordneter Nocken (3, 3a) eingreift, der Antriebskolben (4) auf seiner Innenseite eine drehfeste, einen axialen Verschiebefreiheitsgrad aufweisende Mitnahmeverbindung (4.2.2/5.1a; 4.2.2a/5.1a*) zwischen sich und einer Antriebswelle (5) aufweist, mit der koaxial zum Gehäusemantel (2.1) durch eine erste Gehäusestirnfläche (2.2) des Gehäuses (2) hindurchgreifenden und in dieser radial und zu beiden Seiten axial drehbar um eine Drehachse (A) gelagerten Antriebswelle (5), die von dem Ende des Gehäuses (2) vorsteht, und mit innerhalb des Gehäuses (2) angeordneten Mitteln (9) zur beiderseitigen Begrenzung der Drehbewegung der Antriebswelle (5),
**dadurch gekennzeichnet,**
• **dass** die Antriebswelle (5) innerhalb des Gehäuses (2) in einem Wellenkopf (5.1) endet, der zusammen mit dem Antriebskolben (4) die Mitnahmeverbindung (4.2.2/5.1a; 4.2.2a/5.1a*) ausbildet,
• **dass** der Wellenkopf (5.1) über die Mitnahmeverbindung (4.2.2/5.1a; 4.2.2a/5.1a*) hinaus verlängert und diese Verlängerung verschieblich und abgedichtet durch den Antriebskolben (4) hindurchgeführt und in einer zweiten Gehäusestirnfläche (2.3), die den Gehäusemantel (2.1) an dessen der ersten Gehäusestirnfläche (2.2) abgewandten Ende stirnseitig begrenzt, abgedichtet und drehbar gelagert ist,
• und **dass** der Wellenkopf (5.1) durch die an der ersten Gehäusestirnfläche (2.2) und im Verbindungsbereich zwischen letzterer und dem Gehäusemantel (2.1) angeordneten Mittel (9) eine hubunabhängige, unmittelbare Begrenzung seiner Drehbewegung um die Drehachse (A) erfährt.

3. Betätigungsvorrichtung nach Anspruch 2,
**dadurch gekennzeichnet,**
**dass** die Mitnahmeverbindung (4.2.2/5.1a; 4.2.2a/5.1a*) entweder in Form einer mehrkantförmigen Wellen-Naben-Verbindung oder in Form einer am Antriebskolben (4) ausgebildeten, eine geradverzahnte Vielkeil-Nutung (4.2.2a) aufweisenden Vielkeil-Nabe (4.2.2) und dem zur Vielkeil-Nabe (4.2.2) komplementären, im Eingriffsbereich als Vielkeil-Welle (5.1a) mit einem Vielkeil-Profil (5.1a*) ausgebildeten Wellenkopf (5.1) ausgeführt ist,

4. Betätigungsvorrichtung nach einem der vorhergehenden Ansprüche,
**dadurch gekennzeichnet,**
**dass** die Mittel (9) in unmittelbarer radialer Nähe zum Gehäusemantel (2.1) angeordnet sind.

5. Betätigungsvorrichtung nach einem der vorhergehenden Ansprüche,
**dadurch gekennzeichnet,**
**dass** sich das dem Antriebskolben (4) abgewandte Ende des Wellenkopfes (5.1) über eine Gleitscheibe (8) an der ersten Gehäusestirnfläche (2.2) abstützt.

6. Betätigungsvorrichtung nach einem der vorhergehenden Ansprüche,
**dadurch gekennzeichnet,**
**dass** an der der ersten Gehäusestirnfläche (2.2) zugewandten Seite eines Kolbenbodens (4.1) des Antriebskolbens (4) ein topfförmig ausgebildeter Kolbenschaft (4.2) vorgesehen ist.

7. Betätigungsvorrichtung nach Anspruch 6,
**dadurch gekennzeichnet,**
**dass** die Kurvenführung (4.2.1) im Kolbenschaft (4.2) ausgebildet ist.

8. Betätigungsvorrichtung nach Anspruch 7,
**dadurch gekennzeichnet,**
**dass** die Kurvenführung (4.2.1) in Form einer zum freien Ende des Kolbenschaftes (4.2) hin offenen wendelförmigen Nut (4.2.1 a) ausgebildet ist.

9. Betätigungsvorrichtung nach Anspruch 7,
**dadurch gekennzeichnet,**
**dass** die Kurvenführung (4.2.1) in Form zweier, jeweils zum freien Ende des Kolbenschaftes (4.2) hin offenen wendelförmigen Nuten (4.2.1 a) ausgebildet ist, die diametral einander gegenüberliegend angeordnet sind.

10. Betätigungsvorrichtung nach einem der vorhergehenden Ansprüche,
**dadurch gekennzeichnet,**
**dass** die erste Gehäusestirnfläche (2.2) und ein an der dem Wellenkopf (5.1) abgewandten Seite der ersten Gehäusestirnfläche (2.2) angeordnetes Laternengehäuse (7) über wenigstens zwei und jeweils in der ersten Gehäusestirnfläche (2.2) verankerte Verbindungsbolzen (9) in Verbindung mit jeweils einer zugeordneten Verbindungsmutter (10) miteinander verschraubt sind.

11. Betätigungsvorrichtung nach Anspruch 10,
**dadurch gekennzeichnet,**
**dass** der Wellenkopf (5.1) an seinem der ersten Gehäusestirnfläche (2.2) zugewandten Ende als Wellenkopf-Fuß (5.1b) in Form eines ringförmigen, zum Gehäusemantel (2.1) hin auskragenden Flansches ausgebildet ist, und dass im Wellenkopf-Fuß (5.1b) zwei kreisringsegmentartige Ausnehmungen (5.1 e) diametral einander gegenüberliegend angeordnet sind, in die jeweils ein Kopf (9a) des Verbindungsbolzens (9) eingreift, wobei die jeweilige umfangsseitige Begrenzung der Ausnehmung (5.1e) als Anschlagfläche für den Kopf (9a) dient und der Wellenkopf (5.1) zwischen seinen beiden Endlagen einen gewünschten Drehwinkel beschreibt.

12. Betätigungsvorrichtung nach Anspruch 11,
**dadurch gekennzeichnet,**
**dass** die jeweilige Ausnehmung (5.1e) am Umfang des Wellenkopf-Fußes (5.1 b) und zu diesem Umfang hin offen ausgeführt ist.

13. Betätigungsvorrichtung nach Anspruch 11,
**dadurch gekennzeichnet,**
**dass** die jeweilige Ausnehmung (5.1e) am Umfang des Wellenkopf-Fußes (5.1 b) und in Form einer geschlossenen Ringnut ausgeführt ist.

14. Betätigungsvorrichtung nach Anspruch 1 oder einem der Ansprüche 4 bis 13,
**dadurch gekennzeichnet,**
**dass** die wenigstens eine Rückstellfeder (6) an einem Wellenkopf-Boden (5.1 c) in einer zentrisch im Wellenkopf (5.1) ausgebildeten topfförmigen Ausnehmung (5.1d) anliegt.

15. Betätigungsvorrichtung nach einem der Ansprüche 2 bis 13,
**dadurch gekennzeichnet,**
**dass** die wenigstens eine Rückstellfeder (6) den Wellenkopf (5.1) und seine Mitnahmeverbindung (4.2.2/5.1a; 4.2.2a/5.1a*) mit dem Antriebskolben (4) radial außenseits umschließt.

## Claims

1. An actuator for a rotatable valve closure element (100),
in particular a pneumatically or hydraulically actuatable rotary drive (1) for a disk or throttle valve, with a housing (2), in which an axially displaceable and rotatable drive piston (4) sealed against a cylindrical housing casing (2.1) and able to be supplied on one side with a pressurizing means (D) is arranged, which executes a movement against the effect of at least one return spring (6) when supplied with the pressurizing means (D), the drive piston being provided on its outside with at least one cam guide (4.2.1), into which a cam (3, 3a) permanently arranged on the housing casing (2.1) engages, the drive piston (4) having on its inside a torque-proof driving connection (4.2.2/5.a; 4.2.2a/5.1a*) having an axial displacement variance between itself and a drive shaft (5), with the drive shaft (5) penetrating a first housing front surface (2.2) of the housing (2) coaxially to the housing casing (2.1) and radially and on both sides mounted in the first housing front surface in an axially rotatable manner around a rotary axis (A), the drive shaft protruding from the end of the housing (2), and with means (9) arranged within the housing (2) for restricting the rotary movement of the drive shaft (5) on both sides,
**characterized in that**
• the driving connection (4.2.2/5.1a; 4.2.2a/5.1a*) is designed either in the form of a polygonal shaft-hub connection or in the form of a multi-spline hub (4.2.2) formed on the drive piston (4), having a spur-toothed multi-spline grooving (4.2.2a), and a shaft head (5.1) complementary to the multi-spline hub (4.2.2) designed in the engagement area as a multi-spline shaft (5.1a) with a multi-spline profile (5.1a*), which forms the end of the drive shaft (5),
• the shaft head (5.1) is mounted in an overhung manner in the first housing front surface (2.2) and engages in an overhung manner in the driving connection (4.2.2/5.a; 4.2.2a/5.1a*) in the drive piston (4),
• and the shaft head (5.1) experiences a stroke-independent, direct restriction of its rotary movement around the rotary axis (A) through the means (9) arranged on the first housing front surface (2.2) and in the connection area between the latter and the housing casing (2.1).

2. An actuator for a rotatable valve closure element (100),
in particular a pneumatically or hydraulically actuatable rotary drive (1) for a disk or throttle valve, with a housing (2), in which an axially displaceable and rotatable drive piston (4) sealed against a cylindrical housing casing (2.1) and able to be supplied on one side with a pressurizing means (D) is arranged, which executes a movement against the effect of at least one return spring (6) when supplied with the pressurizing means (D), the drive piston being provided on its outside with at least one cam guide (4.2.1), into which a cam (3, 3a) permanently arranged on the housing casing (2.1) engages, the drive piston (4) having on its inside a torque-proof driving connection (4.2.2/5.a; 4.2.2a/5.1a*) having an axial displacement variance between itself and a drive shaft (5), with the drive shaft (5) penetrating a first housing front surface (2.2) of the housing (2) coaxially to the housing casing (2.1) and radially and on both sides mounted in it in an axially rotatable manner around a rotary axis (A), the drive shaft protruding from the end of the housing (2), and with means (9) arranged within the housing (2) for restricting the rotary movement of the drive shaft (5) on both sides, **characterized in that**
• the drive shaft (5) within the housing (2) ends in a shaft head (5.1), which forms the driving connection (4.2.2/5.a; 4.2.2a/5.1a*) together with the drive piston (4),
• the shaft head (5.1) extends beyond the driving connection (4.2.2/5.1a; 4.2.2a/5.1a*) and this extension passes through the drive piston (4) in a displaceable and sealed manner and is sealed and rotatably mounted in a second housing front surface (2.3), which delimits the housing casing (2.1) on its end facing away from the first housing front surface (2.2),
• and the shaft head experiences a stroke-independent, direct restriction of its rotary movement around the rotary axis (A) through the means (9) arranged on the first housing front surface (2.2) and in the connection area between the latter and the housing casing (2.1).

3. The actuator according to claim 2,
**characterized in that**
the driving connection (4.2.2/5.a; 4.2.2a/5.1a*) is designed either in the form of a polygonal shaft-hub connection or in the form of a multi-spline hub (4.2.2) formed on the drive piston (4), having a spur-toothed multi-spline grooving (4.2.2a), and the shaft head (5.1) complementary to the multi-spline hub (4.2.2) designed in the engagement area as a multi-spline shaft (5.1a) with a multi-spline profile (5.1a*).

4. The actuator according to one of the previous claims,
**characterized in that**
the means (9) are arranged in the direct radial vicinity of the housing casing (2.1).

5. The actuator according to one of the previous claims,
**characterized in that**
the end of the shaft head (5.1) facing away from the drive piston (4) is supported via a sliding disk (8) on the first housing front surface (2.2).

6. The actuator according to one of the previous claims,
**characterized in that**
a piston shaft (4.2) designed in a pot-like manner is provided on the side of a piston crown (4.1) of the drive piston (4) facing the first housing front surface (2.2).

7. The actuator according to claim 6,
**characterized in that**
the cam guide (4.2.1) is designed in the piston shaft (4.2).

8. The actuator according to claim 7,
**characterized in that**
the cam guide (4.2.1) is designed in the form of a helical groove (4.2.1a) open towards the free end of the piston shaft (4.2).

9. The actuator according to claim 7,
**characterized in that**
the cam guide (4.2.1) is designed in the form of two helical grooves (4.2.1a) each open towards the free end of the piston shaft (4.2), which are arranged diametrically opposed to each other.

10. The actuator according to one of the previous claims,
**characterized in that**
the first housing front surface (2.2) and a lamp housing (7) arranged on the side of the first housing front surface (2.2) facing away from the shaft head (5.1) are screwed together via at least two connection bolts (9) respectively anchored in the first housing front surface (2.2) in connection with respectively one associated connection nut (10).

11. The actuator according to claim 10,
**characterized in that**
the shaft head (5.1) on its end facing the first housing front surface (2.2) is designed as a shaft head foot (5.1b) in the form of an annular flange projecting towards the housing casing (2.1) and **in that** in the shaft head foot (5.1b) two circular-ring-segment-like recesses (5.1e) are arranged diametrically opposed to each other, into which respectively one head (9a) of the connection bolt (9) engages, wherein the respective circumferential delimitation of the recess (5.1e) serves as a stop surface for the head (9a) and the shaft head (5.1) between its two end positions describes a desired rotary angle.

12. The actuator according to claim 11,
**characterized in that**
the respective recess (5.1e) is designed on the circumference of the shaft head foot (5.1b) and open towards this circumference.

13. The actuator according to claim 11,
**characterized in that**
the respective recess (5.1e) is designed on the circumference of the shaft head foot (5.1b) and in the form of a closed annular groove.

14. The actuator according to claim 1 or one of claims 4 to 13,
**characterized in that**
the at least one return spring (6) abuts against a shaft head bottom (5.1c) in a pot-like recess (5.1d) designed centrically in the shaft head (5.1).

15. The actuator according to one of claims 2 to 13,
**characterized in that**
the at least one return spring (6) surrounds on the radial outside the shaft head (5.1) and its driving connection (4.2.2/5.a; 4.2.2a/5.1a*) with the drive piston (4).

## Revendications

1. Dispositif de commande d'un élément d'arrêt rotatif d'une soupape (100), en particulier d'un entraînement rotatif (1) pour une soupape à disque ou un robinet à papillon pouvant être commandé de manière pneumatique ou hydraulique, avec un boîtier (2), dans lequel est disposé un piston d'entraînement (4) rendu étanche vis-à-vis d'une enveloppe de boîtier (2.1) cylindrique, pouvant être exposé d'un côté à un moyen de pression (D), pouvant être déplacé par coulissement ou tourné axialement, qui, lorsqu'il est exposé au moyen de pression (D), exécute un mouvement contre l'action d'au moins un ressort de rappel (6), qui, à son extrémité extérieure, est muni d'au moins un guidage en courbe (4.2.1) dans lequel engrène une came (3, 3a) disposée de façon fixe sur l'enveloppe de boîtier (2.1), le piston d'entraînement (4) présente sur son côté intérieur, entre lui et un arbre d'entraînement, (5) une liaison d'entraînement (4.2.2/5.1a ; 4.2.2a/5.1a*) bloquée en rotation et présentant un degré de liberté de déplacement axial, avec l'arbre d'entraînement (5), traversant coaxialement à l'enveloppe de boîtier (2.1) une première surface frontale de boîtier (2.2) du boîtier (2) et supporté dans celle-ci radialement et pouvant tourner des deux côtés axialement autour d'un axe de rotation (A), l'arbre d'entraînement dépasse de l'extrémité du boîtier (2), et avec des moyens (9) disposés à l'intérieur du boîtier (2) pour la limitation, des deux côtés, du mouvement de rotation de l'arbre d'entraînement (5),
**caractérisé en ce que**
• la liaison d'entraînement (4.2.2/5.1a; 4.2.2a/5.1a*) est réalisée soit sous forme d'une liaison arbre-moyeu polygonale, soit sous forme de moyeu cannelé (4.2.2) constitué sur le piston d'entraînement (4), présentant une rainure cannelée (4.2.2.a) à denture droite, et sur une tête d'arbre (5.1), complémentaire du moyeu cannelé (4.2.2), constituée dans la zone d'engrènement en tant qu'arbre cannelé (5.1a) avec un profil cannelé (5.1a*), qui forme l'extrémité de l'arbre d'entraînement (5),
• **en ce que** la tête d'arbre (5.1) est supportée de façon flottante dans la première surface frontale de boîtier (2.2) et engrène de façon flottante dans la liaison d'entraînement (4.2.2/5.1a ; 4.2.2a/5.1a*) dans le piston d'entraînement (4),
• et **en ce que** la tête d'arbre (5.1), sous l'action des moyens (9) disposés sur la première surface frontale de boîtier (2.2) et dans le zone de liaison entre celle-ci et l'enveloppe de boîtier (2.1), subit une limitation directe, indépendante de la course, de son mouvement rotatif autour de l'axe de rotation (A).

2. Dispositif de commande d'un élément d'arrêt rotatif d'une soupape (100),
en particulier d'un entraînement rotatif (1) pour une soupape à disque ou un robinet à papillon pouvant être commandé de manière pneumatique ou hydraulique, avec un boîtier (2), dans lequel est disposé un piston d'entraînement (4) rendu étanche vis-à-vis d'une enveloppe de boîtier (2.1) cylindrique, pouvant être exposé d'un côté à un moyen de pression (D), pouvant être déplacé par coulissement ou tourné axialement, qui, lorsqu'il est exposé au moyen de pression (D), exécute un mouvement contre l'action d'au moins un ressort de rappel (6), qui, à son extrémité extérieure, est muni d'au moins un guidage en courbe (4.2.1) dans lequel engrène une came (3, 3a) disposée de façon fixe sur l'enveloppe de boîtier (2.1), le piston d'entraînement (4) présente sur son côté intérieur, entre lui et un arbre d'entraînement, (5) une liaison d'entraînement (4.2.2/5.1a ; 4.2.2a/5.1a*) bloquée en rotation et présentant un degré de liberté de déplacement axial, avec l'arbre d'entraînement (5) traversant coaxialement à l'enveloppe de boîtier (2.1) une première surface frontale de boîtier (2.2) du boîtier (2) et supporté dans celle-ci radialement et pouvant tourner des deux côtés axialement autour d'un axe de rotation (A), l'arbre d'entraînement dépasse de l'extrémité du boîtier (2), et avec des moyens (9) disposés à l'intérieur du boîtier (2) pour la limitation, des deux côtés, du mouvement de rotation de l'arbre d'entraînement (5),
**caractérisé en ce que**
• l'arbre d'entraînement (5) se termine à l'intérieur du boîtier (2) dans une tête d'arbre (5.1) qui constitue, conjointement avec le piston d'entraînement (4), la liaison d'entraînement (4.2.2/5.1a ; 4.2.2a/5.1a*),
• **en ce que** la tête d'arbre (5.1) est prolongée au-delà de la liaison d'entraînement (4.2.2/5.1a; 4.2.2a/5.1a*), et ce prolongement est conduit, de manière coulissante et de façon rendue étanche, à travers le piston d'entraînement (4) et est supporté de façon rendue étanche et rotative dans une deuxième surface frontale de boîtier (2.3) qui limite l'enveloppe de boîtier (2.1) côté frontal sur son extrémité éloignée de la première surface frontale de boîtier (2.2),
• et **en ce que** la tête d'arbre (5.1), sous l'action des moyens (9) disposés sur la première surface frontale de boîtier (2.2) et dans le zone de liaison entre cette dernière et l'enveloppe de boîtier (2.1), subit une limitation directe, indépendante de la course, de son mouvement rotatif autour de l'axe de rotation (A).

3. Dispositif de commande selon la revendication 2,
**caractérisé en ce que**
la liaison d'entraînement (4.2.2/5.1a ; 4.2.2a/5.1a*) est réalisée soit sous forme d'une liaison arbre-moyeu polygonale, soit sous forme de moyeu cannelé (4.2.2) constitué sur le piston d'entraînement (4), présentant une rainure cannelée (4.2.2.a) à denture droite, et sur la tête d'arbre (5.1), complémentaire du moyeu cannelé (4.2.2), constituée dans la zone d'engrènement en tant qu'arbre cannelé (5.1a) avec un profil cannelé (5.1a*).

4. Dispositif de commande selon l'une des revendications précédentes,
**caractérisé en ce que**
les moyens (9) sont disposés à proximité radiale immédiate de l'enveloppe de boîtier (2.1).

5. Dispositif de commande selon l'une des revendications précédentes,
**caractérisé en ce que**
l'extrémité de la tête d'arbre (5.1) éloignée du piston d'entraînement (4) s'appuie par le biais d'un disque de glissement (8) sur la première surface frontale de boîtier (2.2).

6. Dispositif de commande selon l'une des revendications précédentes,
**caractérisé en ce**
**qu'**il est prévu une tige de piston (4.2) constituée en forme de pot sur le côté d'un fond de piston (4.1) du piston d'entraînement (4) qui est tourné vers la première surface frontale de boîtier (2.2).

7. Dispositif de commande selon la revendication 6,
**caractérisé en ce que**
le guidage en courbe (4.2.1) est constitué dans la tige de piston (4.2).

8. Dispositif de commande selon la revendication 7,
**caractérisé en ce que**
le guidage en courbe (4.2.1) est constitué sous forme d'une rainure (4.2.1.a) de forme hélicoïdale ouverte vers l'extrémité libre de la tige de piston (4.2).

9. Dispositif de commande selon la revendication 7,
**caractérisé en ce que**
le guidage en courbe (4.2.1) est constitué sous forme de deux rainures (4.2.1.a), de forme hélicoïdale, respectivement ouvertes vers l'extrémité libre de la tige de piston (4.2), qui sont disposées de façon diamétralement opposée.

10. Dispositif de commande selon l'une des revendications précédentes,
**caractérisé en ce que**
la première surface frontale de boîtier (2.2) et un boîtier lanterné (7) disposé sur le côté de la première surface frontale de boîtier (2.2) qui est éloigné de la tête d'arbre (5.1) sont assemblés l'une à l'autre par vissage par le biais d'au moins deux boulons de raccordement (9) ancrés respectivement dans la première surface frontale de boîtier (2.2), en liaison avec respectivement un écrou de raccordement (10) affecté.

11. Dispositif de commande selon la revendication 10,
**caractérisé en ce que**
la tête d'arbre (5.1) est, sur son côté tourné vers la première surface frontale de boîtier (2.2), constituée en tant que pied de tête d'arbre (5.1b) sous forme d'une bride annulaire qui fait saillie vers l'enveloppe de boîtier (2.1), et **en ce que**, dans le pied de tête d'arbre (5.1b), il est disposé deux creux (5.1e) du type segment de couronne diamétralement opposés dans lesquels engrène respectivement une tête (9a) du boulon de raccordement (9), la limitation respective, côté circonférence, du creux (5.1e) servant de surface de butée pour la tête (9a), et la tête d'arbre (5.1) décrivant entre ses deux positions extrêmes un angle de rotation souhaité.

12. Dispositif de commande selon la revendication 11,
**caractérisé en ce que**
le creux (5.1e) respectif est réalisé sur la circonférence du pied de tête d'arbre (5.1b) et de façon ouverte vers cette circonférence.

13. Dispositif de commande selon la revendication 11,
**caractérisé en ce que**
le creux (5.1e) respectif est réalisé sur la circonférence du pied de tête d'arbre (5.1b) et sous forme de rainure annulaire fermée.

14. Dispositif de commande selon la revendication 1 ou selon l'une des revendications 4 à 13,
**caractérisé en ce que**
le ressort de rappel (6) au moins au nombre de un est adjacent à un fond de tête d'arbre (5.1c) dans un creux (5.1d) en forme de pot constitué de façon centrée dans la tête d'arbre (5.1).

15. Dispositif de commande selon l'une des revendications 2 à 13,
**caractérisé en ce que**
le ressort de rappel (6) au moins au nombre de un entoure la tête d'arbre (5.1) et sa liaison d'entraînement (4.2.2/5.1a ; 4.2.2a/5.1a*) avec le piston d'entraînement (4) du côté extérieur radialement.
